(19) Europäisches Patentamt / European Patent Office / Office européen des brevets

(11) **EP 3 669 670 A1**

(12) **EUROPEAN PATENT APPLICATION**

(43) Date of publication:
**24.06.2020 Bulletin 2020/26**

(51) Int Cl.:
**A23L 29/212** (2016.01)     **A23L 23/10** (2016.01)
**A23P 30/20** (2016.01)

(21) Application number: **18214807.2**

(22) Date of filing: **20.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Unilever N.V.**
**3013 AL Rotterdam (NL)**

(72) Inventors:
- **de Oliveira, Marcelo Camilo**
  **Heilbronn 74074 (DE)**
- **Sailer, Winfred**
  **Heilbronn 74074 (DE)**

(74) Representative: **van den Brom, Coenraad Richard**
**Unilever Patent Group**
**Bronland 14**
**6708 WH Wageningen (NL)**

(54) **SAVOURY COMPOSITION**

(57) The present invention relates to a shaped savoury composition comprising particles of puffed maize endosperm. The present invention also relates to a method of preparing such a composition and to the use of puffed maize endosperm in food products.

EP 3 669 670 A1

## Description

The present invention relates to a shaped savoury composition comprising particles of puffed maize endosperm. The present invention also relates to a method of preparing such a composition and to the use of puffed maize endosperm in food products.

## Background

Savoury compositions are well known in the food industry and are used, for instance, to prepare a sauce, soup or bouillon. Savoury compositions typically comprise one or more of salt, taste enhancer, fat, herbs, spices, flavourants, and fillers, such as starch or flour, among others. Such compositions can be in the form of a loose powder than can be added e.g. by spooning or sprinkling into a cooking liquid, or in the form of a cube or tablet that can be added in one go or by crumbling into a cooking liquid.

In general, two types of bouillon cubes can be distinguished in the art, the pressed and the extruded (pasty or gel) type. Pressed cubes are typically pressed from powder, resulting in a relatively hard and dense cube, by a rotating press, as commercially available from e.g. Bonals (trademark).

The extruded cube, which is softer and normally is constituted of fat in the continuous phase, is typically, but not necessarily, prepared by extruding a pasty mass in commercially available machines from e.g. Corazza or Benhill (trademarks). In order to shape the bouillon composition into a relatively quick dissolving stable cube by compression or extrusion, a binding compound is highly advantageous. In most cases, a certain amount of fat is used for this purpose. Shaping towards the pasty cube, using extrusion, in general requires a higher fat content than using compression. Hence, extruded cubes in general have a higher fat content than pressed cubes.

EP 0 981 970 discloses a process for producing stock cubes by mixing the customary constituents comprising salt, fat, extract, and, if appropriate, water and other customary additives, which is characterized in the mixing is performed by continuous addition of the constituents one after the other in an extruder, an amount of fat which is reduced in comparison with customary formulations of 4-30%, in particular 5-25%, preferably 8-12%, based on the total mixture, the mixture continuously processed in the extruder being extruded through a shaping die to form a dimensionally stable extrudate having a density of 1.0-2.0 g/cm$^3$, preferably 1.2-1.7 g/cm$^3$, and the extrudate being portioned to the individual pieces which are packaged. Example 3 discloses a composition of salt (56 wt.%), MSG (21 wt.%), seasonings (3 wt.%), liquid meat extract (9 wt.%) and liquid fat (10 wt.%). Such stock cubes have a solid, greasy appearance that is not visually appealing to the consumer.

There are increasing regulatory pressures to reduce the amount of salt and additives such as starch in shaped savoury compositions. However, a shaped savoury composition having a reduced salt and/or starch concentration must still conform to standard packaging requirements and have the desired crumbling and dissolution characteristics that the consumer expects for it to be acceptable to the consumer. Costumers usually crumble the product between the fingers for faster dissolution.

WO 2003/000077 describes a method for making a soft bouillon tablet. The bouillon tablet contains fine particles, and the pasty properties result from the presence of a substantial amount of oil. Due to the higher fat content, pasty cubes normally leave a greasy touch and residues of the stock cube to the fingers, which is not appreciated. However, reducing the fat content can negatively affect the structure of the shaped pasty composition.

In addition, pasty compositions normally include fillers, such as starch and flours, to allow high salt concentrations. The amount of starch in these products can be as high as 40 wt.%. However, the use of starch in pasty cubes is associated with some processing disadvantages, such as high density of the product, posing higher requirements to the equipment during production. In addition, the dissolution speed of the final products containing starch is poor and requires crumbling and stirring.

However, without starch the savoury composition compositions typically suffer from phase separation due to the high fat content.

In addition, due to the starch content compositions may show undesirable discoloration after months of storage.

It is another object of the present invention to provide a shaped savoury composition that is easy to crumble and dissolve but that has reduced salt and/or starch amounts than conventional shaped savoury compositions.

There remains therefore a need for shaped soft compositions with improved dissolution behavior, processability, color.

## SUMMARY OF THE INVENTION

The inventors have unexpectedly found that the incorporation of particles of puffed maize endosperm in a shaped savoury composition article, such as a bouillon cube, effectively allows reducing the total mass of the cube formulation without impacting its volume/shape of the cube. Also, the use of particles of puffed maize endosperm as a partial or total replacement of starch advantageously allow obtaining comparable cubes in terms of volume and/or mass but without negatively affecting dissolution time.

Accordingly, the present invention provides a shaped savoury composition comprising:

a) 10-70 wt.%, by weight of the composition, of an edible salt selected from sodium chloride, potassium chloride and combinations thereof;
b) 10-35 wt.%, by weight of the composition, of fat component
c) 1-30 wt.%, by weight of the composition, of taste giving ingredients selected from glutamate, 5'-ribonucleotides, sucrose, glucose, fructose, lactic acid, citric acid and combinations thereof;
d) 0 - 50 wt.%, by weight of the composition, of polar liquid; and
e) 0.2-10 wt.%, by weight of the composition, of particles of puffed maize endosperm, wherein at least 80 wt.% of the particles of the puffed maize endosperm have an average particle size of less than 3.0 mm,

wherein the combination of a) and b) constitutes at least 40 wt.% of the composition.

## DETAILED DESCRIPTION

The word 'comprising' as used herein is intended to mean 'including' but not necessarily 'consisting of' or 'composed of'. In other words, the listed steps or options need not be exhaustive.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "particles" as used herein in relation to a material, refers to a particulate material that consists of discrete particles, preferably discrete particles having an average particle size of at least 10 $\mu$m. Particle size distributions of particulate components can suitably be determined with a set of sieves of different mesh sizes. The average particle size as referred to herein is the volume weighted average particle size that can be measured by the skilled person using conventional methods, for example by sieve analysis.

*Edible salt*

The edible salt that is used in accordance with the present invention is selected from sodium chloride, potassium chloride and combinations thereof. Preferably, sodium chloride represents at least 50 wt.%, more preferably at least 80 wt.% and most preferably at least 98 wt.% of said edible salt.

The edible salt which is employed in accordance with the invention preferably has a mass weighted average diameter in the range of 10-2000 $\mu$m, more preferably in the range of 100-1200 $\mu$m, and most preferably in the range of 200-800 $\mu$m.

Typically, at least 80 wt.% of the edible salt has a particle size in the range of 10-2000 $\mu$m. Even more preferably at least 80 wt.% of the edible salt has a particle size in the range of 50-1500 $\mu$m. Most preferably, at least 80 wt.% of the edible salt has a particle size in the range of 100-1000 $\mu$m.

The savoury composition preferably contains 32-70 wt.%, more preferably at least 34-60 wt.% and most preferably 35-50 wt.% of edible salt selected from sodium chloride, potassium chloride and combinations thereof. Most preferably, the edible salt is sodium chloride.

The combination of edible salt and the one or more particulate ingredients preferably constitutes at least 50 wt.%, preferably at least 60 wt.% of the composition. Most preferably the combination of edible salt and the one or more particulate ingredients constitutes 50-90 wt.% of the savoury composition.

Besides edible salt, the one or more particulate ingredients and the optional edible components, the savoury composition may suitably contain a variety of other edible ingredients. Examples of such ingredients include extracts of herbs or spices, meat extracts, flavours and colouring.

Preferably, the savoury composition comprises not more than 10 wt.% of other edible ingredients selected from extracts of herbs or spices, meat extracts, flavours and colouring. More preferably, the savoury composition comprises not more than 5 wt.%, most preferably not more than 2.5 wt.% of said other edible ingredients.

Preferably, the savoury composition comprises less than 2.5 wt.% of maltodextrin. More preferably the savoury composition comprises less than 1 wt.% of maltodextrin. Most preferably, the savoury composition comprises no maltodextrin.

*Fat*

The savoury composition has a total fat content of 10-35 wt.%. Preferably, the total fat content is 10-30 wt.%, more preferably 10-35 wt.%, even more preferably 10-20 wt.%.

Preferably the fat component has a solid fat content at 20°C (N20) of at least 5%, at least 10%, more preferably of 25-95% and most preferably of 50-90%.

The fat used to prepare the fat containing powder mixture typically has a solid fat content at 35°C (N35) of less than 30%, more preferably of less than 15% and most preferably of 0%.

The SAFA content of the fat that is employed to prepare the fat containing powder mixture preferably does not exceed 60% by weight of the total amount of fatty acids. More preferably, said SAFA content does not exceed 40 wt.%, most preferably it does not exceed 20 wt.%.

According to a particularly preferred embodiment, the fat employed in the preparation of the fat containing powder mixture contains at least 50 wt.% vegetable oil, more preferably at least 80 wt.% of vegetable oil. Examples of vegetable oils that may be employed include sunflower oil, soybean oil, rapeseed oil, cottonseed oil, maize oil, olive oil, palm oil, palm kernel oil, coconut oil, fractions of these oils and combinations thereof.

Fat in the present invention include oils and fats that are solid or liquid between 20 and 70 °C. The proportion of solid fat present is given by the N-value. The N-value $N_t$ equals the solid fat content of a fat at a temperature of 10°C as measured by means of ISO 8292 2008- Animal and vegetable fats and oils - Determination of solid fat content - Pulsed nuclear magnetic resonance method.

The total fat, preferably present in an amount as indicated in the paragraph here above, preferably has a solid fat content at 20 °C (N20) of 5 to 80 wt.%, preferably 10 to 45 wt.%, more preferably 20 to 40 wt.%, based on the weight of the fat. The total fat preferably has a solid fat content at 30 °C (N30) of 1 to 60 wt.%, more 3 to 55 wt.%, even more preferably 10 to 50 wt.%, based on the weight of the fat.

The composition of the invention comprises preferably 2 to 40 wt.%, more preferably 5 to 30 wt.%, even more preferably 7 to 20 wt.% and most preferably 10 to 15 wt.% of solid fat at 20 °C (N20), based on the weight of the savoury composition.

The melting point of the fat is preferably in the range of 20 to 70°C, more preferably in the range of 25 to 65°C, even more preferably in the range of 30 to 60 °C, most preferably in the range of 35 to 50°C. The melting point is considered the lowest temperature at which the solids level according to ISO 8292 1D 2008 is below 0.5%.

The composition preferably comprises 20 to 50 wt.%, preferably 25 to 45 wt.%, even more preferably 30 to 40 wt.%, most preferably 35 to 38 wt.% of palm oil component, having N20 of at least 60% and N30 of at least 40%.

*Savoury taste giving ingredients*

The composition preferably comprises, by weight of the composition, 3-25 wt.%, preferably 5-20 wt.%, of the savoury taste giving ingredients, selected from glutamate, 5'-ribonucleotides, sucrose, glucose, fructose, lactic acid, citric acid and combinations thereof.

The one or more savoury taste giving ingredients employed in the present process typically have a mass weighted average diameter of at least 10 $\mu$m, more preferably of 15-3000 $\mu$m and more preferably of 20-2000 $\mu$m, even more preferably 30-1000 $\mu$m and most preferably 40-500 $\mu$m.

Sucrose, glucose and fructose are preferably present in the savoury composition in a total amount of 0 to 10 wt.%, more preferably 1 to 4 wt.%, even more preferably 1.5 to 2.5 wt.%, based on the weight of the savoury composition.

Glutamate, for example monosodium glutamate, is preferably present in the savoury composition in an amount of 0 to 25 wt.%, more preferably 5 to 20 wt.%, even more preferably 10 to 20 wt.%, based on the weight of the savoury composition.

Preferably, edible acids selected from the group of lactic acid, citric acid and combinations thereof, are present in the composition in an amount of 0 to 10 wt.%, more preferably 1 to 4 wt.%, even more preferably 1.5 to 2.5 wt.%, based on the weight of the savoury composition.

The savoury taste ingredients may be added as such or as part of a complex ingredient mixture. In a preferred embodiment, one or more of the savoury taste giving ingredients are provided by ingredients selected from the group consisting of yeast extract, hydrolysed vegetable protein, dry meat extract, dry spices, herbs and mixtures thereof.

The savoury composition according to the invention preferably comprises 0 to 5 wt.%, more preferably 0.1 to 1 wt.%, or even 0.5 to 2 wt.%, dry meat extract, based on the weight of the savoury composition.

Preferably, the savoury composition comprises yeast extracts and/or hydrolysed vegetable protein. Preferably, the savoury composition comprises 0 to 5 wt.% more preferably 0.1 to 3 wt.%, most preferably 0.5 to 2 wt.% yeast extracts and/or hydrolysed vegetable protein, by weight of the savoury composition.

The total amount of edible salt and savoury taste giving ingredients in the savoury composition is preferably 20 to 90 wt.%, preferably 30 to 80 wt.%, even more preferably 40 to 70 wt.%, based on the weight of the savoury composition. It is especially preferred that the total amount edible salt and savoury taste giving ingredients in the savoury composition is higher than that of the other non-fat ingredients, like fillers, flavour ingredients and water.

*Polar liquid and polar fluid*

The composition according to the present invention comprises 0 - 50 wt.%, by weight of the composition, of polar liquid. The polar liquid employed in the present composition can be pure liquid or a mixture of liquids. The polar liquid may further contain one or more dissolved or dispersed components.

In accordance with one embodiment, the polar liquid contains 50-100 wt.%, more preferably 70-100 wt.% and most preferably 80-100 wt.% of fluid selected from water, liquid polyols, alcohols, sugar syrups and combinations thereof. Examples of liquid polyols that may be employed include glycerol and propylene glycol. Preferably, the polar liquid contains 50-100 wt.% water. More preferably the polar liquid contains 70-100 water, most preferably 90-100 wt.% water.

According to another preferred embodiment, the polar liquid contains 15-90 wt.% water and 10-85 wt.% of solute. The solute preferably contains at least 80 wt.% of sugars, salts, polysaccharides and combinations thereof. More preferably, the solute contains at least 80 wt.% of sugars. Preferably, these sugars are selected from the group of monosaccharides, disaccharides and trisaccharides.

According to yet another embodiment, the polar liquid is a single phase mixture of two or more polar liquids, e.g. of water and glycerol. Preferably, the single phase mixture contains at least 50 wt.% water.

The savoury composition preferably contains 0.2-8 wt.% of the polar fluid. More preferably, the composition contains 0.4-6 wt.%, most preferably 0.5-4 wt.% of the polar fluid.

The water content of the savoury composition preferably lies in the range of 0.1-6 wt.%, more preferably of 0.2-4 wt.% and most preferably of 0.3-3 wt.%.

*Puffed maize endosperm particles*

Maize is cultivated around the world. One of the most common ways of consuming maize is puffing its endosperm. Puffed maize endosperm, also popularly known as popcorn, is consumed as a food per se. The fruits or maize cobs contain the seeds of the maize, known as maize kernels. Maize kernels have a typical shape and structure, which typically includes a germ, endosperm and pericarp. The endosperm tissue of maize is particularly rich in starches, typically amylase and amylopectin. In addition, it has a relatively high fibre content. The pericarp (hull) of maize kernels is relatively strong and water-impermeable

The particles of puffed maize endosperm can be suitably obtained by puffing of maize endosperm (e.g. when maize kernel is subjected to a heat and/or pressure treatment resulting in the kernel structure having bubble-shaped pores), followed by milling or other methods of size reduction. Puffed maize endosperm is also known as "popcorn". If for example popped popcorn is comminuted, the resulting mixture of particles may include germ, endosperm and pericarp, but most of the volume and weight will usually be constituted by the expanded endosperm.

Depending on the comminution method, it may be desirable to fractionate the ground material, in order to obtain a particulate material with a suitable size distribution. Such fractionation is conveniently carried out by sieving, which is a well-known technique.

The particle size distribution of the particles of puffed endosperm material used in the present invention can also conveniently be analysed by sieving. It is preferred that such analysis is carried out following the sieving method described in the Examples section below.

Puffing of maize endosperm requires a high starch content. Preferably, the maize endosperm has a starch content of at least 50 wt.%, more preferably of at least 60. wt.% and most preferably of at least 70 wt.%, by weight of dry matter.

A process of puffing can for example be done, by pre-cooking and drying the maize kernels, followed by a heating step (e.g. frying in oil). Alternatively, the maize kernels can for example be puffed by explosion/gun puffing, where the raw or pre-cooked maize kernels are placed in a sealed drum that is rotated and heated from the outside until a certain pressure is obtained, the lid is released and all maize kernels puff at the same time, and escape the drum via the lid, and are collected in a bag where water vapour can escape.

Maize kernels comprise a water impermeable hull, which keeps the water inside the seed during heating, are suitable for popping. Popping is an (almost) explosive form of puffing, in which heating of the maize kernels causes starch gelatinization and pressure build-up due to steam formation until the hull bursts and the maize kernels explosively expands to form a foamy structure.

The particles of puffed maize endosperm are preferably obtained from puffed popcorn, more preferably from popped popcorn. Certain maize cultivars have been specifically bred for their suitability to be popped, including for instance Zea mays var. everta. Therefore, the particles of puffed maize endosperm are most preferably sourced from Zea mays var. everta.

According to a preferred embodiment, at least 80 wt.%, more preferably at least 90 wt.% of the starch within the puffed maize endosperm is gelatinized.

The puffed maize endosperm particles preferably have a bulk density that falls within the range of 5-220 g/l. More preferably, the puffed maize endosperm particles have a bulk density that falls within the range of 15-190 g/l, most preferably a bulk density that falls within the range of 30-170 g/l. Preferably, the puffed maize endosperm has a bulk density in the range of 25 to 100 g/L, more preferably between 35 to 80 g/L, even more preferably between 45 to 60 g/L .

The term 'bulk density' as used herein, unless indicated otherwise, refers to freely settled bulk density. Bulk density can be measured using the method of DIN:ISO 697:1981-03.

Preferably, at least 80 wt.% of the particles of the puffed maize endosperm have an average particle size of less than 2.0 mm, preferably wherein the at least 80 wt.% of the particles of the puffed maize endosperm have an average particle size of less than 1.5 mm, more preferably wherein the at least 80 wt.% of the particles of the puffed maize endosperm have an average particle size of less than 1.0 mm, even more preferably wherein the at least 80 wt.% of the particles of the puffed maize endosperm have an average particle size of less than 0.5 mm.

Expressed differently, the particles of the puffed maize endosperm have an average particle size of at least 10 μm, preferably wherein at least 80 wt.% of the particles pass a sieve with apertures of 2.0 mm, more preferably 1.5 mm, more preferably 1.0 mm, even more preferably 0.5 mm.

In a preferred embodiment, the composition has a density of 0.8 to 1.2 kg/l, at 20°C. In a preferred embodiment, the density is 0.9 to 1.1 kg/l, at 20°C, more preferably 1.2 to 1.4 kg/l, at 20°C.

Density can be suitably determined using the buoyancy method. An analytical balance was used (Sartorius MSA324P-100-DU) with density determination kit (YDK01MS) or similar. The Archimedean principle is applied for determining the specific gravity of a solid with this measuring device: A savoury composition (e.g. bouillon cube) is immersed in a liquid is subjected to the force of buoyancy. The value of this force is the same at that of the weight of the liquid displaced by the volume of the bouillon cube. With a hydrostatic balance which enables you to weight a bouillon cube in air as well as in water, it is possible to:

Determine the specific gravity of a bouillon cube if the density of the liquid causing the buoyancy is known:

$$\rho = (W(a) * \rho(fl))/(W(a) * W(fl))$$

$\rho$ = specific gravity of the bouillon cube
$\rho$ (fl) = density of the liquid
W(a) = Weight of the solid in air
W(fl) = Weight of the solid in liquid

Preferably, the combination of edible salt and the one or more particulate ingredients constitutes at least 60 wt.% of the savoury composition, preferably wherein the combination of a) -e) constitutes at least 75 % of the savoury composition.

*Savoury composition*

The shaped savoury composition of the present invention is solid or semisolid, preferably solid at 20°C. Upon dilution with water, typically hot water, the savoury composition preferably forms a bouillon, broth, gravy or sauce. According to a particularly preferred embodiment, the savoury composition is a bouillon cube, most preferably an extruded bouillon cube. Besides a strict cube shape, "cube " comprises shapes like a tablet, pillow, cylinder, ball, pyramid, as long as the shape can be used as a unit dosing format. Preferably, the shaped composition is provided in the form of a cuboid, more preferably in the form of a rectangular cuboid and most preferably in the form of a cube.

The savoury composition typically has a unit weight between 1 and 50 g, preferably between 2 and 25 g, more preferably between 3 and 22 g, and even preferably between 4 and 20 g, most preferably between 5 and 15 g.

The savoury composition of the present invention preferably has a hardness in the range of 10-1000N, preferably 15-750N, more preferably 30-500 N, even more preferably 50-450N.

The hardness of the pasty cubes can suitably be measured by a compression test. The hardness is defined as the maximum force needed to break the sample. Such a measurement can be carried out using a Texture Analyser XT plus from Stable Micro Systems as described in the examples of the present application.

Preferably, the shaped composition has a water activity of less than 0.8, preferably less than 0.65, more preferably less than 0.5, even more preferably less than 0.4, more preferably less than 0.3 and preferably more than 0.15.

Typically, wherein the shaped composition has

The composition comprises 0 to 20 wt.%, by weight of the savoury composition, of a filler selected from the group consisting of starch, flour, xanthan gum, Locust bean gum, guar gum, gellan gum, carboxymethylcellulose and mixtures thereof.

In the context of the present invention a filler is a polysaccharide that acts as a bulking agent and / or structurant. Preferably, the starch is any commercially available starch as commonly used in shaped food compositions. Typical examples of starches commonly used in savoury compositions include native potato starch, corn starch, tapioca starch, rice starch.

The filler is typically present in the savoury composition in a concentration of 0 to 20 wt.%, more preferably 1 to 15 wt.%, even more preferably 2 to 12 wt.%, most preferably 5 to 10 wt.%, by weight of the savoury composition.

The total amount of amorphous powdery ingredients in the savoury composition is preferably lower than 30 wt.%, more preferably lower than 25 wt.%, most preferably lower than 20 wt.%, by weight of the savoury composition. In a preferred embodiment of the present invention, the combination of components a), b) and c) constitutes at least 80 wt.% of the savoury composition. Preferably, the combination of components a), b) and c) constitutes at least 85 wt.%, more preferably at least 90 wt.%, and even more preferably at least 95 wt.% of the savoury composition.

In a second aspect, the present invention relates to a method of preparing a shaped savoury composition comprising the steps of:

- combining particles of puffed maize endosperm, wherein at least 80 wt.% of said particles having a volume weighted average particle size of less than 3.0 mm with a fat component;
- combining an edible salt selected and savoury taste giving ingredients with a fat component and polar liquid to obtain a paste,
- extruding the paste to provide a shaped savoury composition.

Amounts, preferred amounts, ingredients and preferred ingredients etcetera as specified for the product apply also for this method, mutatis mutandis, unless specified otherwise.

The savoury composition is prepared by mixing together fat component with particles of puffed maize endosperm, edible salt and savoury taste giving ingredients. The mixing may be carried out in any mixer known in the art. In case the savoury composition comprises solid fat, the solid fat is preferably molten before mixing. Preferably the polar liquid is added to the savoury composition after addition of the dry ingredients such as salt and taste imparting ingredients.

Preferably, the method according to the present invention does not comprise addition of a starch component selected from native starch, pregelatinised starch, maltodextrin, modified starch and combinations thereof, or wherein the starch component is added in an amount of not more than 2% by weight of the final savoury composition and not more than 50% by weight of the particles of puffed maize endosperm.

The polar liquid preferably contains 20-100 wt.% of fluid selected from water, liquid polyols, ethanol and combinations thereof.

Extrusion is preferably conducted with the help of an extruder that comprises a screw auger. The extruded paste is preferably extruded at an exit temperature in the range of 10 to 45 °C.

The shaped savoury composition is preferably packaged into a unit dose having a weight in the range of 2 to 50 grams.

In a third aspect, the present invention relates to the use of a composition according to the present invention for preparing bouillon, soups, sauces, gravies or for use as a seasoning.

The use according to the present invention preferably comprises dissolving the composition according to the invention, at least part of it, in an aqueous liquid, or mixing it into a dish. The aqueous liquid is preferably water, but can be a sauce base, a soup base etc. The dish can be a vegetable dish, meat, fowl, fish etc.

The temperature of the aqueous liquid or the dish is preferably between 60 °C and 100 °C, more preferably of between 65 °C and 90 °C, even more preferably of between 70 °C and 85 °C.

**Examples**

The invention will now be exemplified by the following non-limiting examples:

Hardness

The hardness of the pasty cubes is measured by a compression test. The hardness is defined as the maximum force needed to break the sample.

Texture Analyser XT plus from Stable Micro Systems

30 kg load cell

1/2" Delrin probe (cylindrical probe with diameter of 0.5 inch)

software: Exponent

Dimensions of pasty cube: 24 x 28 mm wide, 11-12 mm high

The test settings are summarized below:

- Pre-test speed: 1.0 mm/sec
- Test speed: 0.5 mm/sec
- Post-test speed: 0.5 mm/sec
- Target distance: 3 mm
- Trigger force: 10 grams

Briefly, the probe was positioned 13 mm above ground level. The thickness of the cube was measured using a digital calliper. The sample was placed under the probe in a centre position. The hardness of the sample was measured at ambient temperature. The sample was compressed over a distance of 3 mm from the point it touches the surface. The recorded strength profile of the sample was plotted. The maximum force needed to break the sample (Peak Positive Force) was used as a measurement for the cube hardness.

Density

Density can be suitably determined using the buoyancy method. An analytical balance was used (Sartorius MSA324P-100-DU) with density determination kit (YDK01MS) or similar. Determine the specific gravity of a bouillon cube if the density of the liquid causing the buoyancy is known:

$$\rho=(W(a)*\rho(fl))/(W(a)*W(fl))$$

| | |
|---|---|
| $\rho$ | = specific gravity of the bouillon cube |
| $\rho(fl)$ | = density of the liquid |
| W(a) | = Weight of the solid in air |
| W(fl) | = Weight of the solid in liquid |

**Example 1-Preparation of shaped edible savoury compositions**

Dry ingredients (salt, glutamate, dry spice mix, puffed maize endosperm, if used) were charged into the bowl of a Kenwood Chef Classic Kitchen blender, equipped with a flexible beater (AT502). These dry ingredients were mixed together at low speed (setting "min") until fully homogeneous (2 minutes). Hereafter, if used, water was added and mixed (2 minutes) at low speed (setting "1").

The fat was added in solid form (extruded fat) at ambient temperature, except for the chicken fat, which was added in semi-liquid form at ambient temperature. The resulting paste was continued to be mixed for 4 minutes (2 minutes at setting "1" + 2 minutes at setting "3").

. Compositions in weight percentage is given in Table 1 below.

**Table 1**

| | A | 1 | 2 | 3 | 4 | 5 | 6 |
|---|---|---|---|---|---|---|---|
| Salt[1] | 41.78 | 41.78 | 41.78 | 41.78 | 41.78 | 41.78 | 41.78 |
| Fat[2] | 19.30 | 19.30 | 19.30 | 19.30 | 19.30 | 19.30 | 19.30 |
| Chicken fat | 2.00 | 2.00 | 2.00 | 2.00 | 2.00 | 2.00 | 2.00 |
| Taste giving ingredients[3] | 26.04 | 26.04 | 26.04 | 26.04 | 26.04 | 26.04 | 26.04 |
| Water | 0 | 1.6 | 0 | 0 | 0 | 0 | 0 |
| Milled popcorn[4] | 0 | 1.5 | 1.5 | 1.5 | 3.0 | 3.0 | 3.0 |
| Corn starch native 12%H2O | 10.88 | 9.38 | 0 | 0 | 0 | 0 | 0 |
| Cube mass (g) | 10 | 10 | 10 | 9 | 10 | 9 | 9.2 |
| Cube volume (ml) | 7.6 | 7.8 | 7.7 | 7.7 | 8 | 7.8 | 8.3 |
| Density (g/mL) | 1,36 | 1,36 | 1,30 | 1,32 | 1,33 | 1,21 | 1,16 |

(continued)

| | A | 1 | 2 | 3 | 4 | 5 | 6 |
|---|---|---|---|---|---|---|---|
| Hardness (N) | 38,3 | 39,1 | 28,4 | 35,6 | 38,2 | 19,8 | 13,6 |

[1]<0,16 mm: 5% max, > 0,8 mm: 5% max.
[2]Mixture (50%/50%) of dry fractionated Palm oil stearin dfPOs IV36 and fully hydrogenated dry fractionated Palm oil stearin dfPOs IV36
[3]: particles < 4 mm,
[4]: average particle size: 0.5, based on sieve analysis (ISO 2591-1:1988) except for sample 6 which particle size was 1.5 mm

### Example 2 - Dissolution test

The dissolution speed of the cubes is measured by a dynamic conductivity measurement.. The sample was dissolved in hot water of 92 °C. In this method, the dissolution time is defined as the time it takes to reach 90% and/or 99% of the final maximum conductivity.

Equipment

- Conductivity meter: WTW InoLab Multi 9310
- Conductivity cell: Tetracon 925, with build in thermo sensor
- Magnetic stirrer: IKA RCT Classic, type IP42, power 650 Watt
- Electric water boiler
- Glass beaker, Duran® 2000 ml (height 185mm, diameter 132mm)
- Magnetic stirring bar, triangular (length 80mm, slides 18 mm)

Preheat 2 liter glass beaker by hot water. Hot boiled water was added to the preheated 2 liter glass beaker and large triangle stirrer added. The conductivity cell and temperature probe were placed into the hot water. The beaker was covered with a plastic lid. The temperature (IKA sensor) was to 92 °C and stirred at 170 rpm. Dissolution time is the average value of 3 measurements.

**Table 1**

| | A | 1 | 2 | 3 | 4 | 5 | 6 |
|---|---|---|---|---|---|---|---|
| Dissolution time (s/g) [$p$=0.05] | 25.25 | 26 | 25.33 | 19.00 | 23.67 | 17.67 | 20.67 |

### Claims

1. A shaped savoury composition comprising:

    a) 10-70 wt.%, by weight of the composition, of an edible salt selected from sodium chloride, potassium chloride and combinations thereof;
    b) 10-35 wt.%, by weight of the composition, of fat component;
    c) 1-30 wt.%, by weight of the composition, of taste giving ingredients selected from glutamate, 5'-ribonucleotides, sucrose, glucose, fructose, lactic acid, citric acid and combinations thereof;
    d) 0 - 50 wt.%, by weight of the composition, of polar liquid; and
    e) 0.2-10 wt.%, by weight of the composition, of particles of puffed maize endosperm, wherein at least 80 wt.% of the particles of the puffed maize endosperm have an average particle size of less than 3.0 mm,

    wherein the combination of a) and b) constitutes at least 40 wt.% of the composition.

2. Shaped composition according to claim 1, wherein the composition has a density of 0.80 to 1.30 kg/l, at 20°C, preferably 0.9 to 1.2 g kg/L.

3. Shaped composition according to any of the preceding claims, wherein the combination of edible salt and the one or more particulate ingredients constitutes at least 60 wt.% of the savoury composition, preferably wherein the combination of a) -e) constitutes at least 75 % of the savoury composition.

4. Shaped composition according to any of the preceding claims, wherein the fat component has a solid fat content at 20°C ($N_{20}$) of at least 5%, at least 10%, more preferably of 25-95% and most preferably of 50-90%.

5. Shaped composition according to any of the preceding claims, wherein shaped composition has a water activity of less than 0.8, preferably less than 0.65, more preferably less than 0.5, even more preferably less than 0.4, more preferably less than 0.3 and preferably more than 0.15.

6. Shaped composition according to any of the preceding claims, wherein the shaped composition has a hardness in the range of 10-1000N, preferably 15-750N, more preferably 30-500 N.

7. Shaped composition according to any of the preceding claims, wherein the shape composition is provided in the form of a cuboid, more preferably in the form of a rectangular cuboid and most preferably in the form of a cube.

8. Shaped composition according to any of the preceding claims, wherein at least 80 wt.% of the particles of the puffed maize endosperm have an average particle size of less than 2.0 mm, preferably wherein the at least 80 wt.% of the particles of the puffed maize endosperm have an average particle size of less than 1.5 mm.

9. Shaped composition according to any of the preceding claims, wherein the composition includes a polar liquid, preferably wherein the polar liquid contains 20-100 wt.% of fluid selected from water, liquid polyols, ethanol and combinations thereof, preferably wherein the polar liquid is water.

10. Shaped composition according to any of the preceding claims, wherein the composition comprises 0 to 20 wt.%, by weight of the savoury composition, of a filler selected from the group consisting of starch, flour, xanthan gum, Locust bean gum, guar gum, gellan gum, carboxymethylcellulose and mixtures thereof.

11. A method of preparing a shaped savoury composition comprising the steps of:

- combining particles of puffed maize endosperm, wherein at least 80 wt.% of said particles having a volume weighted average particle size of less than 3.0 mm, , with a fat component;
- combining an edible salt selected from sodium chloride, potassium chloride and combinations thereof and savoury taste giving ingredients selected from glutamate, 5'-ribonucleotides, sucrose, glucose, fructose, lactic acid, citric acid and combinations thereof to obtain a paste,
- Extruding the paste into shaped savoury composition.

12. Method according to claim 11, wherein a polar liquid is added, preferably wherein the polar liquid contains 20-100 wt.% of fluid selected from water, liquid polyols, ethanol and combinations thereof.

13. Method according to claim 11 or 12, wherein the paste is extruded at an exit temperature in the range of 10 to 45 °C.

14. Method according to any of claims 11-13, wherein the shaped savoury composition is packaged into a unit dose having a weight in the range of 2 to 50 grams.

15. Use of a composition according to any one of claims 1-10 for preparing bouillon, soups, sauces, gravies or for use as a seasoning.

Europäisches
Patentamt

European
Patent Office

Office européen
des brevets

# EUROPEAN SEARCH REPORT

Application Number

EP 18 21 4807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2018/192753 A1 (UNILEVER NV)<br>25 October 2018 (2018-10-25)<br>* page 2, line 26 - page 3, line 2; claims<br>1,2,5,9-13,151,2,5,9-13,15; example 4;<br>table 2B *<br>* page 7, line 2 *<br>* page 8, lines 25-27 *<br>* page 10, line 28 - page 12, line 5 *<br>* page 12, line 16 - page 15, line 3 *<br>----- | 1-5,8,9,<br>15<br>6,7,<br>10-14 | INV.<br>A23L29/212<br>A23L23/10<br>A23P30/20 |
| X<br><br>A | WO 2010/046038 A1 (CARGILL INC)<br>29 April 2010 (2010-04-29)<br>* page 3, lines 3-28 *<br>* page 7, lines 1-2 *<br>* page 8, lines 1-4,6-10,25-29,30-32 *<br>* page 9, lines 15-17; claims 1,4,6,9,10;<br>example 3 *<br>----- | 1-3,5,<br>8-12,15<br>4,6,7,<br>13,14 | |
| X<br><br>A | WO 2017/032685 A1 (UNILEVER NV)<br>2 March 2017 (2017-03-02)<br>* page 2, lines 1-10 - page 4, lines 8-11;<br>claims 1,4,7,12-15 *<br>* page 6, line 21 - page 7, line 19 *<br>* page 7, lines 26-31 *<br>* page 9, lines 14-26; example 3; tables<br>1,8 *<br>----- | 1-9,14,<br>15<br>11-13 | TECHNICAL FIELDS SEARCHED (IPC)<br><br>A23L<br>A23P |
| X<br><br>A | WO 2017/171553 A1 (GRANUPURE BV)<br>5 October 2017 (2017-10-05)<br>* page 2, lines 25-29; claims 18,19,22;<br>figure 4; example 4 *<br>* page 7, lines 30-36 *<br>* page 9, lines 7-33 *<br>* page 21, lines 32-34 *<br>* page 23, lines 22-28 *<br>* page 24, line 15 - page 25, line 2 *<br>----- | 1,3,5,8,<br>10,11,15<br>2,4,6,7,<br>9,12-14 | |

-/--

The present search report has been drawn up for all claims

| Place of search | Date of completion of the search | Examiner |
|---|---|---|
| The Hague | 21 June 2019 | Kanbier, Titia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

## EUROPEAN SEARCH REPORT

Application Number

EP 18 21 4807

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/083410 A1 (GRIFFITH LAB INTERNATIONAL INC) 28 June 2012 (2012-06-28) | 11-15 | |
| A | * paragraphs [0004], [0006], [0011]; claims 1,2,4-6; example 4; tables 3,8 * ----- | 1,2,5-7, 9 | |
| A | WO 2012/119765 A1 (CARGILL INC) 13 September 2012 (2012-09-13) * page 4, line 25 - page 5, line 2 * * pages 6,7,10, lines 25-27; claims 1-6,11; example 3 * * page 3, lines 7-8,19-21,33-34 * ----- | 1,2,8,15 | |

TECHNICAL FIELDS
SEARCHED      (IPC)

The present search report has been drawn up for all claims

| Place of search | Date of completion of the search | Examiner |
|---|---|---|
| The Hague | 21 June 2019 | Kanbier, Titia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&  : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 21 4807

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2019

| Patent document cited in search report | | Publication date | Patent family member(s) | | Publication date |
|---|---|---|---|---|---|
| WO 2018192753 | A1 | 25-10-2018 | NONE | | |
| WO 2010046038 | A1 | 29-04-2010 | EP | 2339927 A1 | 06-07-2011 |
| | | | ES | 2421383 T3 | 02-09-2013 |
| | | | US | 2011212149 A1 | 01-09-2011 |
| | | | WO | 2010046038 A1 | 29-04-2010 |
| WO 2017032685 | A1 | 02-03-2017 | AR | 105804 A1 | 08-11-2017 |
| | | | EP | 3352579 A1 | 01-08-2018 |
| | | | PH | 12018500205 A1 | 30-07-2018 |
| | | | US | 2018228190 A1 | 16-08-2018 |
| | | | WO | 2017032685 A1 | 02-03-2017 |
| WO 2017171553 | A1 | 05-10-2017 | CA | 3019384 A1 | 05-10-2017 |
| | | | CN | 109152375 A | 04-01-2019 |
| | | | EP | 3435774 A1 | 06-02-2019 |
| | | | JP | 2019511249 A | 25-04-2019 |
| | | | US | 2019142055 A1 | 16-05-2019 |
| | | | WO | 2017171553 A1 | 05-10-2017 |
| WO 2012083410 | A1 | 28-06-2012 | NONE | | |
| WO 2012119765 | A1 | 13-09-2012 | BR | 112013022651 A2 | 06-12-2016 |
| | | | EP | 2683745 A1 | 15-01-2014 |
| | | | US | 2014017381 A1 | 16-01-2014 |
| | | | WO | 2012119765 A1 | 13-09-2012 |

EPO FORM P0459

For more details about this annex : see Official Journal of the European Patent Office, No. 12/82

**EP 3 669 670 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0981970 A

- WO 2003000077 A